# EUROPÄISCHE PATENTANMELDUNG

(11) **EP 0 723 168 A2**
(43) Veröffentlichungstag der Anmeldung: **24.07.1996**
(21) Anmeldenummer: 96100045.2
(22) Anmeldetag: 03.01.1996
(51) Int. Cl.: G02B 6/28, H04J 14/08, H03K 5/14

(54) **Einstellbare optische Verzögerungsleitung**

(30) Priorität: 23.01.1995 DE 19501919
(71) Anmelder: SIEMENS AKTIENGESELLSCHAFT, 80333 München (DE)
(72) Erfinder: Das, Chandan, Dr.Ing., D-82131 Gauting (DE); Gaubatz, Ulrich, Dr.rer.nat., D-81927 München (DE); Gottwald, Erich, Dr.rer.nat., D-83607 Holzkirchen (DE)

(57) **Zusammenfassung**

Beim Zusammenführen optischer Impulsströme hoher Bitrate besteht das Problem, daß beispielsweise bei einer Bitrate von 40 Gbit/s die Impulse am Multiplexerausgang 25 ps zeitlichen und etwa 5 mm räumlichen Abstand aufweisen. Bei einer Genauigkeit von 10 % der Bitbreite müssen die Lichtwellenleiter mit einer Genauigkeit von 0,5 mm abgeglichen werden, was bisher mechanisch oder durch Einfügen von längenverstellbaren Freistrahloptiken erfolgte und zu hohem Aufwand führte. Bei der erfindungsgemäßen optischen Verzögerungsleitung wird demgegenüber die Temperatur eines Lichtwellenleiters so verändert, daß sich über die Brechzahländerung der Glasfaser die gewünschte optische Länge einstellt. Die verwendeten Glasfasern sind dabei auf Spulenkörper gewickelt, die in einer Durchbohrung einen mit einer Einrichtung zur Temperaturregelung verbundenen Heizkörper enthalten.

## Beschreibung

Die Erfindung betrifft eine einstellbare optische Verzögerungsleitung entsprechend dem Oberbegriff des Anspruchs 1.

Bei optischen Zeitmultiplex-Systemen ist es häufig erforderlich, zwei oder mehr datenmodulierte Impulszüge, die auf verschiedenen Lichtwellenleitern ankommen, auf einem einzigen Lichtwellenleiter zusammenzufügen. Voraussetzung ist dabei, daß die Impulse vergleichsweise kurz gegenüber der Bitdauer sind, genauer ausgedrückt darf die Impulsdauer bei n zusammenzuführenden Impulszügen weniger als 1/n der Bitdauer des jeweiligen Impulszuges betragen. Damit die Impulse der einzelnen Impulszüge zyklisch nacheinander in den für die Übertragung vorgesehenen Lichtwellenleiter gelangen können, ist eine entsprechende Phasenlage der einzelnen Impulse zueinander Voraussetzung, die durch einstellbare Verzögerungsleitungen erreichbar ist. So müssen beispielsweise beim Multiplexen von vier optischen Signalströmen mit den Bitraten von jeweils 10 Gbit/s zu einem Datenstrom mit einer Summenrate von 40 Gbit/s die Impulse am Multiplexausgang im Idealfall 25 ps voneinander entfernt sein. Dies entspricht aber einem Lichtweg von etwa 5 mm in der Glasfaser. Soll nun der Abstand der Impulse eine Genauigkeit von 10 % der Bitbreite aufweisen, dann müssen die Langen der Lichtwellenleiter vor dem als Multiplexer dienenden 4:1-Koppler mit einer Genauigkeit von 0,5 mm abgeglichen sein. Eine derartige Genauigkeit ist in der Praxis sehr schwierig zu erreichen.

Zum Längenabgleich der Lichtwellenleiter ist es bei niedrigen Bitraten möglich und naheliegend, die Lichtwellenleiter möglichst genau, bezogen auf die richtigen Längendifferenzen, zusammenzuspleißen. Dies ist aber bei hohen Datenraten und bei einer größeren Anzahl von Lichtwellenleitern sehr schwierig und in der Praxis auch sehr aufwendig. Abhilfe ist hier dadurch möglich, daß die Längendifferenzen durch Einfügen von mechanisch längenverstellbaren Freistrahloptiken realisiert werden. Dazu werden die optischen Eingangssignale aus den Lichtwellenleitern ausgekoppelt und nach einer einstellbaren Freistrahl-Übertragungsstrecke wieder in Lichtwellenleitern zusammengeführt. In diesem Falle ist eine
hohe mechanische Stabilität und Genauigkeit der Anordnung erforderlich, um die aufgrund von Fehljustierungen bei der Einkoppelung in den vergleichsweise dünnen Lichtwellenleiter auftretenden Einfügedämpfungen zu minimieren. Bei Verwendung integrierter Lichtwellenleiterstrukturen, bei denen die Laufzeitdifferenzen durch verschieden lange Wege im integrierten Lichtwellenleiter erzeugt werden, ergeben sich hohe Einfügedämpfungen an den beiden Übergangsstellen von und zum integrierten Lichtwellenleiter, der außerdem nicht auf verschiedene Datenraten einstellbar ist.

Die Aufgabe der Erfindung besteht also darin, eine optische Verzögerungsleitung der eingangs erwähnten Art so weiterzubilden, daß diese mit vergleichsweise geringem Aufwand eine auf verschiedene Datenraten einstellbare und regelbare Verzögerung bei möglichst geringer Dämpfung aufweist.

Erfindungsgemäß wird die Aufgabe dadurch gelöst, daß die eingangs erwähnte optische Verzögerungsleitung durch das Merkmal des Kennzeichens des Patentanspruchs 1 weitergebildet ist. Der besondere Vorteil der erfindungsgemäßen Lösung liegt in der Anwendbarkeit auch bei höchsten Datenraten von beispielsweise 160 Gbit/s.

Bevorzugte Weiterbildungen der erfindungsgemäßen optischen Verzögerungsleitung sind in den Patentansprüchen 2 bis 4 und eine vorteilhafte Anwendung ist im Patentanspruch 5 näher beschrieben.

Die Erfindung soll im folgenden anhand von in der Zeichnung dargestellten Ausführungsbeispielen naher erläutert werden.

Dabei zeigt:
- Figur 1: eine erfindungsgemäße optische Verzögerungsleitung und
- Figur 2: eine erfindungsgemäße Anwendung der optischen Verzögerungsleitung nach Figur 1 in einem optischen Multiplexer.

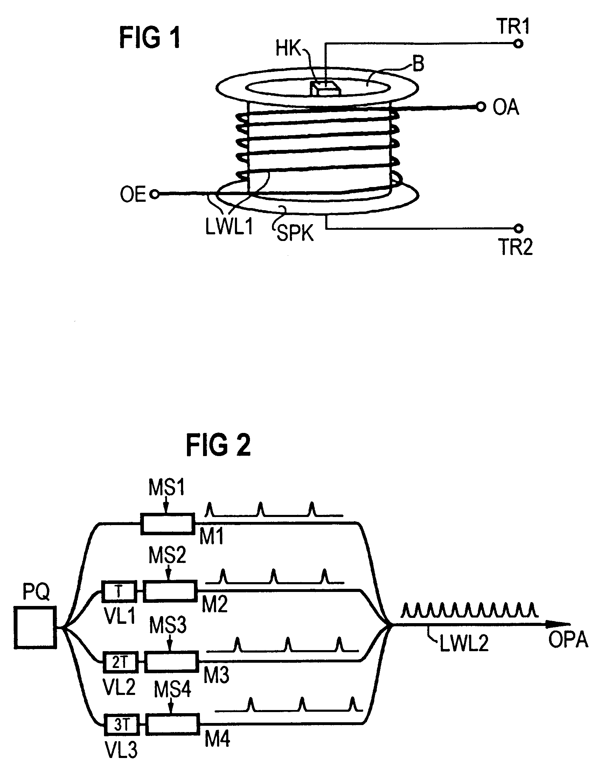

In der Figur 1 ist auf einem Spulenkörper SPK ein erster Lichtwellenleiter LWL1 in einer Länge von einigen hundert Metern aufgewickelt, die beiden Anschlüsse des ersten Lichtwellenleiters LWL1 stellen den optischen Eingang OE und den optischen Ausgang OA der Verzögerungsleitung dar. Der Spulenkörper SPK weist eine zentrale Bohrung B auf, in der ein Heizkörper HK befestigt ist. Der Heizkörper ist über einen ersten und einen zweiten Anschluß TR1, TR2 mit einer Einrichtung zur Temperaturreglung verbunden, von dieser Einrichtung wird der Heizkörper HK mit einem entsprechenden Heizstrom gespeist. Im Hinblick auf eine gute Wärmeleitung ist der Heizkörper mit einer Wärmeleitpaste in dem metallischen Spulenkörper SPK befestigt. Um die aus dem ersten Lichtwellenleiter LWL1 gebildete Wicklung vor thermischen Störungen zu schützen, ist außerdem auf die Wicklung eine Wärmeisolation aufgebracht. Es ist außerdem möglich, den Lichtwellenleiter für sich oder mit einem Spulenkörper in einer heizbaren Flüssigkeit anzuordnen.

Die Funktion der optischen Verzögerungsleitung beruht auf der Temperaturabhängigkeit der Brechzahl des für den Lichtwellenleiter verwendeten Glases, bei deren Veränderung sich auch die optische Länge des Lichtwellenleiters ändert. Durch die Temperaturregelung mit Voreinstellung ist also die wirksame optische Länge der Verzögerungsleitung einstellbar und auch leicht regelbar. Da die Veränderung der optischen Länge neben der Brechzahländerung von der absoluten Länge des Lichtwellenleiters abhängig ist, kann durch die Wahl einer entsprechenden Länge das gewünschte Maß der Laufzeitänderung der optischen Impulse gewählt werden.

In der Figur 2 ist mittels drei der in der Figur 1 dargestellten optischen Verzögerungsleitungen und weiterer Bauteile ein optischer Multiplexer für vier digitale optische Signale mit einer Bitrate von etwa 10 Gbit/s dargestellt. Der erfindungsgemäße Multiplexer erhält von einer Impulsquelle PQ Impulse mit einer Wiederholfrequenz von 10 GHz. Diese Impulse werden dem optischen Eingang eines ersten Modulators M1 direkt und den optischen Eingängen eines zweiten, dritten und vierten Modulators M2, M3, M4 jeweils über eine, zweite oder dritte optische Verzögerungsleitungen zugeführt. Dem ersten Modulator M1 wird über dessen Modulationssignaleingang MS1 ein erstes Modulationssignal zugeführt und erzeugt ein entsprechend moduliertes optisches Signal, das vom Ausgang des ersten Modulators M1 an einen zweiten Lichtwellenleiter LWL2 abgegeben wird, der die Verbindung mit dem optischen Ausgang OP des Multiplexers darstellt. Dem zweiten optischen Modulator M2 ist im Signalweg eine erste optische Verzögerungsleitung VL1 vorgeschaltet, die eine Verzögerung T aufweist, die der Bitperiode des im zweiten Lichtwellenleiter LWL2 auftretenden Multiplexsignals, also der Bitperiode eines der den Modulatoren M1 ... M4 zugeführten modulierenden Signals geteilt durch die Anzahl n der Signalwege, beim Ausführungsbeispiel also geteilt durch 4 entspricht. Durch die erste Verzögerungsleitung VL1 wird also sichergestellt, daß der durch das am Modulationssignaleingang MS2 des zweiten Modulators M2 anliegende Modulationssignal modulierte optische Impuls in das Zeitfach fällt, das auf den vom ersten Modulator M1 abgegebenen Impuls folgt. Entsprechend ist dem dritten Modulator M3 eine zweite optische Verzögerungsleitung VL2 im Lichtweg zwischen der Pulsquelle PQ und dem optischen Eingang des dritten Modulators M3 vorgeschaltet, wobei die zweite optische Verzögerungsleitung VL2 die doppelte Verzögerung 2T gegenüber der Verzögerung T der ersten optischen Verzögerungsleitung VL1 erzeugt . Durch das am Modulationssignaleingang MS3 des dritten Modulators M3 anstehende Modulationssignal wird ein modulierter optischer Impuls erzeugt, der in ein Zeitfach fällt, das auf den vom zweiten Modulator M2 abgegebenen Impuls folgt. Für die Übertragung des am Modulationssignaleingang MS4 des vierten Modulators M4 anstehende Modulationssignal erhält der vierte Modulator M4 über eine dritte optische Verzögerungsleitung VL3 einen von der Impulsquelle PQ erzeugten optischen Impuls, der gegenüber dem optischen Impuls der ersten Verzögerungsleitung VL1 um die dreifache Verzögerungszeit 3T zeitlich verschoben ist.

Nach der Übertragung des optischen Ausgangssignals des vierten Modulators M4 folgt die Übertragung des zweiten Ausgangsimpulses des ersten Modulators M1, so daß sich die Aneinanderfügung der Ausgangsimpulse der einzelnen Modulatoren zyklisch wiederholt. Voraussetzung für die zeitliche Zusammenführung der Ausgangssignale der Modulatoren ist dabei, daß diese Ausgangsignale und damit auch die Ausgangssignale der Impulsquelle PQ eine Dauer aufweisen, die kleiner als 1/n der Bitdauer der zusammenzuführenden Impulszüge ist, wobei n die Anzahl der Modulatoren und damit der zusammenzuführenden Impulszüge entspricht.
Die Reihenfolge von optischen Verzögerungsleitung und Modulator kann im jeweiligen Lichtweg vertauscht werden, im Hinblick auf die unterschiedlichen Polarisationszustände bei Verwendung gewöhnlicher Single-Mode-Fasern als Lichtwellenleiter ist die Verwendung von polarisationserhaltenden Glasfasern bei den Verbindungen im Multiplexer oder das Einfügen von Polarisationsreglern oder Polarisationsstellern sinnvoll. Diese Maßnahmen sind insbesondere dann erforderlich, wenn die optischen Impulse einen vorgegebenen Polarisationszustand aufweisen müssen, wie dies beispielsweise bei der Übertragung von Signalen im Polarisationsmultiplex, bei der Polarisationsabhängigkeit der empfangsseitigen Demultiplexanordnung, bei Polarisationsempfindlichkeiten weiterer Teile der Übertragungstrecke oder bei der Übertragung von nur zwei aus optischen Multiplexern stammenden Ausgangssignalen im Polarisationsmultiplex auf einem einzigen Lichtwellenleiter erforderlich ist.

Im Hinblick auf die Wahl der absoluten Länge der für die optische Verzögerungsleitung verwendeten Lichtwellenleiter kann der Fall auftreten, daß von der Impulsquelle PQ aufeinanderfolgend abgegebene optische Lichtimpulse im Multiplexsignal nicht mehr unmittelbar aufeinanderfolgen, sondern daß der Folgeimpuls ein oder mehrere Multiplexzyklen später auftritt. Dies beeinträchtigt die Übertragung der einzelnen Modulationssignale nicht, sofern diese nicht miteinander korreliert sind. Im letzteren Fall ist es aber durch die Einstellbarkeit der erfindungsgemäßen optischen Verzögerungsleitungen möglich, die richtige Aufeinanderfolge der einzelnen modulierten optischen Impulse sicherzustellen.

## Patentansprüche

1. Optische Verzögerungsleitung, mit einem zwischen Eingang und Ausgang angeschlossenem Lichtwellenleiter und veränderbarer Verzögerung,
**dadurch gekennzeichnet,**
daß die Temperatur des Lichtwellenleiters (LWL) einstellbar und regelbar ist.

2. Optische Verzögerungsleitung nach Patentanspruch 1,
**dadurch gekennzeichnet,**
daß der Lichtwellenleiter (LWL) auf einem Spulenkörper (SPK) aufgewickelt ist, der in einer heizbaren Flüssigkeit angeordnet sein kann.

3. Optische Verzögerungsleitung nach Patentanspruch 2,
**dadurch gekennzeichnet,**
daß der Spulenkörper aus einem gut wärmeleitenden Material, insbesondere aus Metall, besteht.

4. Optische Verzögerungsleitung nach Patentansprüchen 2 oder 3,
**dadurch gekennzeichnet,**
daß der Spulenkörper (SPK) eine zentrale Bohrung (B) aufweist, in der ein mit einer Einrichtung zur Temperaturregelung verbundener Heizkörper (HK) gut wärmeleitend befestigt ist.

5. Optische Verzögerungsleitung nach einem oder mehreren der vorangehenden Patentansprüche,
**gekennzeichnet durch**
ihre Verwendung in einem Multiplexer für optische digitale Signale, bei dem an eine Quelle für gegenüber ihrer Wiederholdauer vergleichsweise kurzen optischen Impulsen ein erster Modulator (M1) unmittelbar angeschlossen ist, daß an die Quelle weiterhin wenigstens eine Reihenschaltung einer optischen Verzögerungsleitung (VL1, VL2, VL3) und eines weiteren Modulators (M2, M3, M4) angeschlossen ist und daß dabei die Verzögerung der ersten optischen Verzögerungsleitung (VL1) einer Bitperiode der optischen digitalen Signale und die der weiteren optischen Verzögerungsleitungen (VL2, VL3) jeweils eine Bitperiode länger als die der vorhergehenden optischen Verzögerungsleitungen (VL1, VL2) entspricht, daß die Ausgänge der Modulatoren (M1 ... M4) mit einem gemeinsamen, an den optischen Ausgang (OPA) angeschlossenen weiteren Lichtwellenleiter (LWL2) verbunden sind und daß die Reihenfolge von optischer Verzögerungsleitung (OVL1 ... 3) und Modulator (M2 ... M4) im jeweiligen Lichtweg vertauschbar ist.
